# EUROPÄISCHE PATENTSCHRIFT

(11) **EP 3 785 874 B1**
(45) Veröffentlichungstag und Bekanntmachung des Hinweises auf die Patenterteilung: **02.11.2022**
(21) Anmeldenummer: 20193297.7
(22) Anmeldetag: 28.08.2020
(51) Int. Cl.: B29C 33/54, B29C 33/76, B29C 33/52

(54) **VERFAHREN ZUR HERSTELLUNG EINES BETRIEBSMITTELTANKS**
METHOD FOR MANUFACTURING A TANK
PROCÉDÉ DE FABRICATION D'UN RÉSERVOIR DE MATIÈRE CONSOMMABLE POUR L'EXPLOITATION

(30) Priorität: 30.08.2019 AT 507582019
(43) Veröffentlichungstag der Anmeldung: 03.03.2021
(73) Patentinhaber: KTM AG, 5230 Mattighofen (AT)
(72) Erfinder: LOCHNER, Hans, 83486 Ramsau bei Berchtesgaden (DE); RAWA, Matthias, 5322 Hof bei Salzburg (AT); STADLBAUER, Robert, 5082 Grödig (AT)
(74) Vertreter: Torggler & Hofmann Patentanwälte - Innsbruck

(56) Entgegenhaltungen:
- EP-A1- 2 733 321
- DE-A1- 19 530 254

## Beschreibung

Die Erfindung betrifft ein Verfahren zur Herstellung eines Betriebsmitteltanks aus Kunststoff für ein Kraftfahrzeug umfassend das Bereitstellen eines aus einem, vorzugsweise riesel- oder fließfähigen, Formkern-Material hergestellten Formkerns, wobei der Formkern zumindest einen Haltebereich aufweist, über den der Formkern in einer Werkzeugform oder in einer Kunststoffformgebungsmaschine gehalten wird, das Umgeben des Formkerns mit einem Kunststoff, wobei an dem zumindest einen Haltebereich, über den der Formkern in einer Werkzeugform oder einer Kunststoffformgebungsmaschine gehalten wird, zumindest eine Öffnung im Betriebsmitteltank verbleibt, sowie das Entfernen des Formkern-Materials aus dem Betriebsmitteltank über die verbleibende Öffnung.

Darüber hinaus betrifft die Erfindung einen Formkern zur Herstellung eines Betriebsmitteltanks aus Kunststoff für ein Kraftfahrzeug und einen Betriebsmitteltank für ein Kraftfahrzeug.

Im Stand der Technik ist es bekannt, Formkerne zur Herstellung von Hohlkörpern aus Kunststoff zu verwenden. Dabei wird zumeist ein riesel- oder fließfähiges Formkern-Material, vorzugsweise ein Granulat, zur Herstellung eines Formkerns verwendet, wobei das Formkern-Material dabei üblicherweise in eine gewisse Form gepresst wird. Anschließend wird der Formkern im Hohlraum einer Werkzeugform oder einer Kunststoffformgebungsmaschine gehalten und mit flüssiger Kunststoff-schmelze umgeben. Nach Druckbeaufschlagung und Aushärten wird der Formkern samt dem Kunststoffmantel entnommen und gegebenenfalls unter Beihilfe eines Lösungsmittels ausgespült, sodass letztlich ein Hohlkörper aus Kunststoff hergestellt ist, dessen Form der Oberfläche des Formkerns entspricht. Ein solcher Formkern ist auch als verlorener Formkern bekannt. Ein derartiger Formkern und ein Verfahren zur Herstellung eines faserverstärkten Strukturhohlbauteils mit einem Formkern ist in der DE 10 2013 106 876 A1 gezeigt.

Die WO 2017/148997 betrifft ebenfalls einen Formkern zur Herstellung eines faserverstärkten Hohlbauteils, wobei der Formkern einen Stützkern mit einer zumindest bereichsweise angeordneten Beschichtung aufweist, die ein Expansionsmaterial umfasst. Dabei wird auf den Formkern eine Matrix mit Verstärkungsfasern angeordnet. Anschließend wird der Formkern in ein Formkernwerkzeug verbracht. Die Matrix wird mittels einer Temperatur- und/oder Druckerhöhung ausgehärtet, wobei das Expansionsmaterial bei der Temperaturerhöhung expandiert und dadurch Verstärkungsfasern an die Innenseite des Formwerkzeugs presst.

Auch die WO 2017/148998 zeigt ein faserverstärktes Strukturhohlbauteil, wobei im Formkern ein Kanal angeordnet wird, in den Verstärkungsfasern und/oder Matrixmaterial eingebracht werden. Nach dem Aushärten des Matrixmaterials und dem Ausspülen des Formkerns verbleibt das in den Kanal eingebrachte Material als Verstärkungselement, insbesondere als Verstärkungsstrebe im Strukturhohlbauteil. Das Verstärkungselement wird gleichzeitig mit der Oberfläche des Hohlbauteils hergestellt und form- sowie stoffschlüssig mit der Wandung des Strukturhohlbauteils verbunden.

Die WO 2018/108674 betrifft einen verlorenen Formkern zur Herstellung eines faserverstärkten Bauteils, wobei der Formkern segmentiert ausgebildet ist. Zwischen den Segmenten ist ein elastisches und/oder flexibles Ausgleichselement angeordnet, wodurch ein translatorischer und/oder rotatorischer Versatz zwischen den beiden Segmenten bei der Herstellung des Bauteils ausgleichbar ist. Für die Herstellung können die Verstärkungsfasern mit der Matrix um den verlorenen Formkern angeordnet werden, bevor der Formkern in einem Formwerkzeug ausgehärtet wird. Zudem kann auf einer Außenfläche des Bauteils ein Verstärkungselement aufgepresst werden. Das Verstärkungselement kann gemeinsam mit der Matrix aushärten, sodass sich eine stoffschlüssige Verbindung zwischen dem Verstärkungselement und der Matrix ergibt. Am Verstärkungselement können auch Befestigungsmittel angeordnet sein, beispielsweise ein Gewindeeinsatz, eine Hülse, ein Haken und/oder eine Bohrung. Dadurch kann das Befestigungsmittel mit dem Verstärkungselement in einfacher Weise an der Außenseite am herzustellenden Bauteil angeordnet werden.

Die JP 2003-291208 und die JP-H10119055 zeigen Verfahren zur Herstellung eines Kraftstofftanks mittels eines verlorenen Formkerns, bei dem ein fester Kunststoff in Form extrudierter, plattenförmiger Halbzeuge um den Formkern angeordnet werden, wobei vom Formkern Absperrventile gravitativ im Formkern gehalten werden. Die extrudierten Kunststoff-Halbzeuge werden mit dem Formkern verpresst und dadurch mit den Absperrventilen verbunden. Die überlappenden Bereiche der Kunststoff-Halbzeuge werden verschweißt. Anschließend kann um die verpressten Kunststoff-Halbzeuge eine weitere Kunststoffschicht beispielsweise mittels eines Spritzguss-Verfahrens angebracht werden. Dieses Verfahren hat den Nachteil, dass die Absperrventile nur ungenügend vom Betriebsmitteltank gehalten werden.

Die DE 195 30 254 A1 beschreibt ein Verfahren zur Herstellung von Hohlräumen in Metall- und Kunststoffgussteilen. Der Hohlraum wird durch einen schmelzbaren, hohlen Formkern gebildet, wobei dieser Formkern durch in den Kernhohlraum eingegossenes flüssiges Material vollständig aufgeschmolzen wird und im verflüssigten Zustand noch vor Öffnung der Form aus dem inzwischen teilweise oder vollständig erstarrten Gussteil entfernt wird.

Die EP 2 733 321 A1 offenbart einen Tank für Harnstoff für Automobile. Eine obere und eine untere Tankhälfte werden aus Kunststoff spritzgegossen und in einem weiteren Schritt zusammengeschweißt. In noch einem weiteren Schritt werden zusätzliche Komponenten befestigt.

Nachteilig am Stand der Technik ist die fehlende Möglichkeit, dass Innere eines mit einem Formkern hergestellten Hohlbauteils zu bearbeiten oder Einlegeteile an vorbestimmten Orten im Inneren des Hohlbauteils anzuordnen und verliersicher dort zu befestigen. Dies betrifft insbesondere Betriebsmitteltanks für Kraftfahrzeuge. Die Aufgabe der Erfindung ist es daher, ein Verfahren zur Verfügung zu stellen, mit dem ein Betriebsmitteltank aus Kunststoff mittels eines Formkerns hergestellt wird, wobei die innere Oberfläche des Betriebsmitteltanks speziell bearbeitet werden soll und/oder ein Einlegeteil an einem vorbestimmten Ort im Inneren im Inneren des Betriebsmitteltanks angeordnet und dort befestigt werden soll.

Diese Aufgabe wird durch ein Verfahren mit den Merkmalen des Anspruchs 1 gelöst. Weitere vorteilhafte Ausführungen der Erfindung sind in den abhängigen Ansprüchen definiert.

Um einen erfindungsgemäßen Betriebsmitteltank aus Kunststoff für ein Kraftfahrzeug herzustellen, wird zunächst ein, vorzugsweise aus einem rieseloder fließfähigen Formkern-Material hergestellter, Formkern bereitgestellt. Beispielsweise kann das Formkern-Material ein Bindemittel und/oder ein Granulat umfassen, wobei das Granulat insbesondere einen mineralischen Grundstoff umfassen kann, wie z.B. ein Glas, ein keramisches Material und/oder Sand.

Der Formkern weist zumindest einen Haltebereich auf, über den der Formkern in einer Werkzeugform oder in einer Kunststoffformgebungsmaschine, beispielsweise einer Spritzgussmaschine, gehalten wird. Derartige Werkzeugformen und Kunststoffformgebungsmaschinen sind prinzipiell im Stand der Technik bekannt. Dabei kann der Haltebereich aus dem gleichen Material wie der restliche Formkern bestehen. Es kann aber auch vorgesehen sein, dass der Haltebereich beispielsweise als metallisches oder keramisches Halteelement ausgebildet ist. Das Halteelement kann mit Befestigungsmitteln, beispielsweise einem Gewinde, versehen sein, mit welchen der Formkern in einer Kunststoffformgebungsmaschine oder einer Werkzeugform gehalten werden kann.

Je nach Art der Kunststoffformgebungsmaschine oder jener Maschine, von der Kunststoffschmelze in die Werkzeugform eingebracht wird, wird der Formkern mit flüssiger oder pastöser Kunststoffschmelze umgeben. Beispielsweise wird Kunststoffschmelze in eine Werkzeugform oder eine Kunststoffformgebungsmaschine eingebracht, wodurch der Formkern mit Kunststoffschmelze umspritzt und/oder hinterspritzt wird. Dabei können an sich im Stand der Technik bekannte Spritzgussmaschinen verwendet werden, wodurch ein kostengünstiges Herstellungsverfahren realisierbar ist. Am Haltebereich, über den der Formkern in der Werkzeugform oder der Kunststoffformgebungsmaschine gehalten wird, verbleibt eine Öffnung im herzustellenden Betriebsmitteltank, da in diesem Bereich ein Umgeben mit Kunststoffschmelze nicht möglich ist.

Für die erfindungsgemäßen Verfahren kommen verschiedenste Kunststoffmaterialien in Frage, etwa thermoplastische Kunststoffe wie zum Beispiel Polypropylen (PP), Polyamide (wie etwa Polyamid 6), Polyethylene (wie zum Beispiel quervernetztes (crosslinked) Polyethylen (XPE) oder hoch-dichtes Polyethylen (HDPE)), Co-Polymere (wie zum Beispiel Ethylen-Vinylalkohol-CoPolymer (EVOH)). Möglich sind auch Mischungen aus Polypropylen und Polyethylen.

Möglich ist auch die Verwendung faserverstärkter Kunststoffe, wobei hier alle möglichen Varianten in Frage kommen, wie z. B. Kohlenstofffaser-verstärkte Kunststoffe (CFK) oder Glasfaser-verstärkte Kunststoffe (GFK). In diesem Fall ist es möglich, die Fasern vor dem Umspritzen mit der Kunststoffschmelze am Formkern anzuordnen.

Nach zumindest teilweisem Aushärten des Kunststoffs wird das Formkernmaterial über die verbleibende Öffnung aus dem Betriebsmitteltank entfernt. Zu diesem Zweck kann es im Falle eines Formkern-Materials mit einem Bindemittel vorteilhaft sein, wenn dieses Bindemittel mittels eines Lösungsmittels löslich ist und dadurch das Formkern-Material einfach aus der Öffnung ausspülbar ist. Ein solches Lösungsmittel kann beispielsweise eine Säure, eine Base, Wasser und/oder einen Alkohol umfassen. Im Falle eines FormkernMaterials ohne Bindemittel kann das Formkern-Material auch einfach mit Wasser oder mit Druckluft aus dem Inneren des Betriebsmitteltanks entfernt werden.

Erfindungsgemäß ist weiters vorgesehen, dass an einem beschränkten, vom Haltebereich gesonderten, Teilbereich des Formkerns ein formstabiles Funktionselement angeordnet und während des Umgebens mit flüssiger oder pastöser Kunststoffschmelze vom Formkern gehalten wird. Dabei kann das Funktionselement insbesondere form- oder kraftschlüssig vom Formkern gehalten werden. Beim Umgeben mit der Kunststoffschmelze wird eine innere Oberfläche des Betriebsmitteltanks gebildet, mit welcher das Funktionselement beim Umgeben mit der Kunststoffschmelze verbunden wird. Nach Aushärten der Kunststoffschmelze und dem Entfernen des Formkern-Materials aus dem Betriebsmitteltank, was nach zumindest teilweisem oder gänzlichen Aushärten der Kunststoffschmelze möglich ist, ist das Funktionselement mit dem Betriebsmitteltank derart stoffschlüssig und/oder formschlüssig verbunden, dass das Funktionselement Zugang zum Inneren des Betriebsmitteltanks hat.

Dadurch ist es möglich, dass zumindest eine Seite des Funktionselements auch nach der Verbindung mit dem Betriebsmitteltank frei bleibt und sich die vom Funktionselement zu erfüllende Funktion auf das Innere des Betriebsmitteltanks beziehen kann. Beim Funktionselement kann es sich beispielsweise um ein elektronisches Funktionselement handeln, das einen Sensor und/oder eine Sende- und/oder Empfangseinheit aufweist. Ein solcher Sensor kann beispielsweise den Füllstand des Betriebsmitteltanks oder den Zustand des im Betriebsmitteltank angeordneten Betriebsmittels erfassen und über eine Sendeeinheit weiterleiten, z.B. um eine Warnung im Display des Kraftfahrzeugs anzuzeigen.

Im Fall eines Sensors kann es sich auch um einen Piezo-Sensor handeln, der über Druckzustände im Inneren des Betriebsmitteltanks Aufschluss gibt. Das Funktionselement kann beispielsweise auch eine Steuer- und/oder Regeleinheit aufweisen, wobei je nach Zustand des Betriebsmittels Steuer- oder Regelungssignale an das Kraftfahrzeug weitergeleitet werden oder solche Signale in Abhängigkeit des Betriebszustands des Fahrzeugs erhalten werden. Das Funktionselement kann beispielsweise auch einen integrierten Temperaturfühler enthalten, der ebenfalls Aufschluss über den Zustand des Betriebsmittels gibt. Das Funktionselement kann zusätzlich oder alternativ auch weitere Sensoren, zum Beispiel für den Füllstand des Betriebsmitteltanks, für den Druck im Betriebsmitteltank, für die Messung des Durchflusses im Betriebsmitteltank und/oder für die Messung des Abstands zu anderen im Betriebsmitteltank angeordneten Gegenständen aufweisen. Es kann sich auch um einen Chip handeln, der die Identifikation von Originalbauteilen ermöglicht. Durch die Anordnung im Inneren des Betriebsmitteltanks ist ein Austauschen des Chips und somit ein Missbrauch praktisch unmöglich. Zudem könnte über eine Sende- und Empfangseinheit ein Auffinden gestohlener Kraftfahrzeuge möglich sein.

Das Funktionselement kann auch ein Dichtungselement und/oder ein Befestigungselement enthalten. Insbesondere bei einem Kraftstofftank werden im Inneren des Tanks verschiedene Zu- und Ableitungen, beispielsweise für flüssigen Kraftstoff zum Motor oder für verdunsteten Kraftstoff zu einem Aktivkohlefilter, angeordnet. Mit im Inneren des Betriebsmitteltanks bereits an vorbestimmten Stellen angeordneten Dichtungselementen können gas- oder flüssigkeitsdichte Verbindungen mit den Zu- und Ableitungen sichergestellt werden. Bei einem Befestigungselement kann es sich beispielsweise um einen Gewindeeinsatz handeln, mit dem zusätzliche Bauteile im Inneren des Betriebsmitteltanks befestigt werden können. Der Gewindeeinsatz kann aber auch in einem, an den Haltebereich anschließenden Bereich am Formkern angeordnet werden. Über einen solchen Gewindeeinsatz kann es etwa möglich sein, den Betriebsmitteltank als solchen im Kraftfahrzeug zu befestigen.

Beim Funktionselement kann es sich auch beispielsweise um eine Kabelführung handeln, die im Inneren des Betriebsmitteltanks angeordnet und fest mit dem Betriebsmitteltank verbunden wird. Dadurch ist ein Verrutschen der Kabelführung, insbesondere wenn die Kabel eingezogen werden, unmöglich.

Als Funktionselement können aber auch verschiedene Einleger, beispielsweise aus Metall, Kunststoff, Keramik oder Hybridmaterial dienen, die verschiedene Funktionen im Inneren des Betriebsmitteltanks erfüllen. Derartige Einleger können beispielsweise Befestigungsmittel sein, mit denen andere nachträglich im Betriebsmitteltank angeordnete Gegenstände befestigt werden können, wie zum Beispiel die Zuleitung zum Vergaser oder auch etwaige Anschlusselemente. Ebenfalls können Einleger als Führungs- und Halteelemente, zum Beispiel für die Kabelführung, dienen. Das Funktionselement kann aber auch als ein Schalter ausgebildet sein, der mit dem erfindungsgemäßen Verfahren im Inneren des Betriebsmitteltanks angeordnet werden kann.

Das formstabile Funktionselement erfüllt den Zweck, dass es während dem Umgeben mit der Kunststoffschmelze nicht deformiert wird und dadurch nicht in seiner Funktion eingeschränkt wird. Durch die Anordnung und das Halten am Formkern während des Umgebens mit der Kunststoffschmelze wird sichergestellt, dass das Funktionselement an dem vorbestimmten Bereich im Inneren des Betriebsmitteltanks platziert wird.

In einem Ausführungsbeispiel ist vorgesehen, dass an einem beschränkten, vom Haltebereich gesonderten Teilbereich des Formkerns ein Strukturelement angeordnet wird, welches während des Umgebens mit flüssiger oder pastöser Kunststoffschmelze vom Formkern gehalten wird. Beim Umgeben mit der Kunststoffschmelze wird eine innere Oberfläche des Betriebsmitteltanks gebildet, auf welche ein auf dem Strukturelement angeordnetes Strukturmerkmal beim Umgeben mit der Kunststoffschmelze während des Aushärtens der Kunststoffschmelze übertragen wird. Das Strukturelement befindet sich dabei zwischen dem Kern und dem Betriebsmitteltank und beeinflusst die Endform des Betriebsmitteltanks auf dessen Innenseite.

Bei diesem Strukturmerkmal kann es sich beispielsweise um eine geometrische Struktur auf dem Strukturelement handeln, wobei auf der Innenwandung des Betriebsmitteltanks eine Negativform dieser geometrischen Struktur erzeugt wird. Mit dieser Methode können beispielsweise Kanäle auf Bereichen der Innenseite des Betriebsmitteltanks erzeugt werden, wodurch ein besonderes Fließverhalten des Betriebsmittels erwirkt werden kann. In einer Ausführungsform ist das Strukturmerkmal durch eine glatte Oberfläche des Strukturelements gebildet. Bei einer Übertragung dieses Strukturmerkmals auf die innere Oberfläche des Betriebsmitteltanks weist der beim Umgeben mit der Kunststoffschmelze dem Strukturelement gegenüberliegende Bereich eine sehr glatte Innenwandung auf. Eine solche glatte Oberfläche kann in einem Betriebsmitteltank beispielsweise notwendig sein, um als Anlagefläche für einen nachträglich im Betriebsmitteltank angeordneten Flansch zu dienen oder um ein Abperlen von Kraftstoff oder von Ölen, die im Betriebsmitteltank gelagert werden, zu erleichtern. Ein Teilbereich der Innenwandung des Betriebsmitteltanks mit sehr glatter Oberfläche kann auch als Verschleißschutz oder als Lagerfläche für im Inneren des Betriebsmitteltanks angeordnete Bauteile dienen.

Das Strukturelement kann vorzugsweise aus einem metallischen und/oder keramischen Material bestehen. Für das Strukturelement kommen beispielsweise Einlegeelemente in Frage. Diese Einlegeelemente können die Oberflächenrauigkeit auf der Innenseite des Betriebsmitteltanks beeinflussen und beispielsweise eine besonders glatte innere Oberfläche erzeugen. Je nach Ausbildung des Strukturelements können auf der Innenseite des Betriebsmitteltanks auch Rippen, Schwallwände,Füllkanäle, Dichtflächen oder Gewinde ausgebildet werden. Mit Rippen auf der Innenseite können spezielle Teile des Betriebsmitteltanks verstärkt und stabiler ausgeführt werden. Mit Schwallwänden können größere Verlagerungen des Betriebsmittels während der Bewegung des Fahrzeugs verhindert werden. Dies ist insbesondere für Kraftstofftanks und Motorräder, bei denen hohe Schräglagen auftreten können, relevant. Besonders vorteilhaft ist dabei, dass die Rippen und die Schwallwände integraler Bestandteil des Betriebsmitteltanks sind und gleichzeitig mit dessen Herstellung erstellt werden und aus dem gleichen Material bestehen. Damit können Spannungen im Betriebsmitteltank vermieden oder verringert werden.

In einer Ausführungsform weist das Strukturelement einen flächigen Bereich auf, auf welchem das oder die Strukturmerkmal(e) angeordnet ist oder sind. Dadurch können flächige Bereich der Innenseite des Betriebsmitteltanks beispielsweise mit einer geometrischen Struktur versehen werden oder besonders glatt ausgebildet werden.

Nach dem Umgeben mit der Kunststoffschmelze und zumindest teilweisem oder gänzlichem Aushärten der Schmelze wird das Strukturelement gegebenenfalls nach Zerkleinerung des Strukturelements durch die verbleibende Öffnung aus dem Betriebsmitteltank entfernt, vorzugsweise zeitgleich oder nach dem Entfernen des Formkern-Materials. Dies ist möglich, sobald der Betriebsmitteltank zumindest eine gewisse Härte aufweist.

Der erfindungsgemäße Betriebsmitteltank kann ein Kraftstofftank, ein Öltank oder aber auch ein Tank für andere Betriebsmittel wie z.B. Bremsflüssigkeit sein. Nachdem auch Spritzgussmaschinen für das Anordnen von Kunststoffschmelze gemäß dem erfindungsgemäßen Verfahren vorgesehen sind, können gemäß der Erfindung Betriebsmitteltanks spritzgegossen werden. Dabei ist es möglich, im Inneren des spritzgegossenen Betriebsmitteltanks ein Einlegeteil in Form eines formstabilen Funktionselement an einem vorbestimmten Ort zu befestigen oder eine gewünschte Beschaffenheit der inneren Oberfläche an einem vorbestimmten Ort zu erzeugen.

Ein Betriebsmitteltank, der nach einem der erfindungsgemäßen Verfahren hergestellt wird, hat den Vorteil, dass Funktionselemente im Inneren des Betriebsmitteltanks ortsfest platziert werden können, ohne dass der Betriebsmitteltank nach der Platzierung des Funktionselements im Nachhinein geschlossen werden muss. Es sind somit keine Schweißnähte notwendig. Zudem kann ein solcher Betriebsmitteltank mit einer konstanten und vordefinierten Wandstärke hergestellt werden. Dies ist ein wichtiger Sicherheitsaspekt. Damit ist es nämlich möglich, dass der Betriebsmitteltank eine möglichst geringe, aber aus sicherheitstechnischer Sicht doch ausreichende Wandstärke aufweist. Dadurch sind leichte Betriebsmitteltanks möglich, ohne dass Einbußen in Bezug auf die Sicherheit hingenommen werden müssen.

Der Formkern kann in einer Ausführungsform über zwei oder mehr Haltebereiche verfügen, über die der Formkern in einer Werkzeugform oder einer Kunststoffformgebungsmaschine, beispielsweise einer Spritzgussmaschine, gehalten wird. Dadurch kann der Formkern stabiler in der Werkzeugform oder der Kunststoffformgebungsmaschine gehalten werden. Zudem ist das Entfernen des Formkern-Materials leichter möglich. Gleichzeitig kann über die Öffnung(en) im Betriebsmitteltank, die in einem oder in mehreren der Haltebereiche verbleiben, Betriebsmittel zu- oder abgeführt werden.

In einer Ausführungsform der Erfindung wird das Funktionselement und/oder das Strukturelement während des Umgebens mit Kunststoffschmelze vom Formkern formschlüssig gehalten. Zu diesem Zweck kann es beispielsweise vorgesehen sein, dass bestimmte Bereiche des Strukturelements und/oder des Funktionselements als Haltebereiche dienen und das Formkern-Material während der Herstellung des Formkerns um diese Haltebereiche anzuordnen.

Zusätzlich oder alternativ kann es vorgesehen sein, das Funktionselement und/oder das Strukturelement während des Umgebens mit Kunststoffschmelze vom Formkern kraftschlüssig zu halten. Zu diesem Zweck kann es beispielsweise vorgesehen sein, dass auf dem Strukturelement und/oder dem Funktionselement ein Außengewinde angeordnet ist und der Formkern über eine Ausnehmung mit einem dazu passenden Innengewinde verfügt. Das Funktionselement und/oder das Strukturelement wird dann in diese Ausnehmung angeordnet und mittels der Gewinde gehalten. Dadurch ist ein besonders starker Halt ermöglicht.

Zusätzlich oder alternativ kann es vorgesehen sein, das Funktionselement und/oder das Strukturelement während des Umgebens mit Kunststoffschmelze stoffschlüssig vom Formkern zu halten. Zu diesem Zweck kann es vorgesehen sein, das Strukturelement und/oder dem Funktionselement mittels eines Klebstoffs auf den Formkern zu kleben.

Eine form-, kraft- und/oder stoffschlüssige Verbindung ermöglicht eine besonders stabile Verbindung des Formkerns mit dem Funktionselement und/oder dem Strukturelement, sodass die Gefahr des Verrutschens des Funktionselements und/oder des Strukturelements während des Umgebens mit der Kunststoffschmelze verringert wird.

Es kann vorgesehen sein, dass an dem wenigstens einen Haltebereich ein vorzugsweise metallisches Haltemittel angeordnet ist, mit dem der Formkern in einer Werkzeugform oder einer Kunststoffformgebungsmaschine gehalten wird. Dieses Haltemittel kann beispielsweise ein Außengewinde oder andere Befestigungsmittel aufweisen.

Der Formkern kann in einer Ausführungsform aus mindestens zwei Segmenten zusammengesetzt sein, wobei jeweils zwei Segmente über ein Verbindungsmittel miteinander verbunden sind. Beim Verbindungsmittel kann es sich beispielsweise um ein elastisches Ausgleichsmittel handeln, um translatorischen oder rotatorischen Versatz zu kompensieren. Das Verbindungsmittel wird nach dem Umgeben mit der Kunststoffschmelze durch die verbleibende Öffnung aus dem Betriebsmitteltank entfernt. Durch einen segmentierten Formkern können auch Geometrien mit Hinterschneidungen einfach realisiert werden.

Der Formkern kann ein Granulat umfassen, wobei das Granulat aus Sand und/Schaumstoff-Kügelchen bestehen kann. Schaumstoff-Kügelchen bieten den Vorteil eines geringen Gewichts, wodurch die Handhabung des Formkerns erleichtert wird. Für den Formkern kommt insbesondere Sand mit einer Korngröße zwischen 170 und 220 µm in Frage. Als Schaumstoff-Kügelchen kommt beispielsweise ein Standard-Polystyrol-Granulat in Frage mit einer Korngröße zwischen 1 und 5 mm.

Der Formkern kann in einer Ausführungsform einen Mantel aus einem auflösbaren oder zerkleinerbaren Material aufweisen. Derartige Mäntel für Formkerne sind an sich im Stand der Technik bekannt. Mit einer Mantelfläche kann es möglich sein, auf Bindemittel für den innerhalb des Mantels angeordneten Formkern zu verzichten.

Der Formkern kann mit einem an sich im Stand der Technik bekannten 3D-Druckverfahren hergestellt werden. Dies bringt insbesondere für die Anordnung des Funktionselements und/oder des Strukturelements Vorteile.

Die Erfindung betrifft weiters einen Formkern zur Herstellung eines Betriebsmitteltanks aus Kunststoff für ein Kraftfahrzeug gemäß einem der oben beschriebenen Verfahren. Dabei kann der Formkern einen speziell ausgebildeten Bereich aufweisen, in dem das Strukturelement oder das formstabile Funktionselement während des Umgebens mit der Kunststoffschmelze gehalten wird.

Die Erfindung betrifft weiters einen Betriebsmitteltank für ein Kraftfahrzeug, wobei der Betriebsmitteltank über ein Kunststoff-Spritzgussverfahren nach einem wie oben beschriebenen Verfahren hergestellt wird.

Weitere Vorteile und Einzelheiten der Erfindung werden für verschiedene Ausführungsbeispiele anhand der folgenden Figuren diskutiert. Dabei zeigt:
- Fig. 1: eine schematische Querschnittsdarstellung eines Betriebsmitteltanks mit darin angeordnetem Formkern,
- Fig. 2: eine teilweise geschnittene, schematische perspektivische Ansicht eines aus Segmenten zusammengesetzten Formkerns,
- Fig. 3a bis 3c: schematische Darstellungen zur Anordnung eines Funktionselements im Inneren eines Betriebsmitteltanks sowie zur Übertragung von Strukturelementen auf die innere Oberfläche eines Betriebsmitteltanks,
- Fig. 4: eine schematische Darstellung eines Innenbereichs eines Betriebsmitteltanks mit übertragenem Strukturmerkmal,
- Fig. 5: eine schematische Darstellung zur Anordnung eines Formkerns in einer Werkzeugform und
- Fig. 6a bis 6e: schematische Darstellungen zum erfindungsgemäßen Verfahrensablauf.

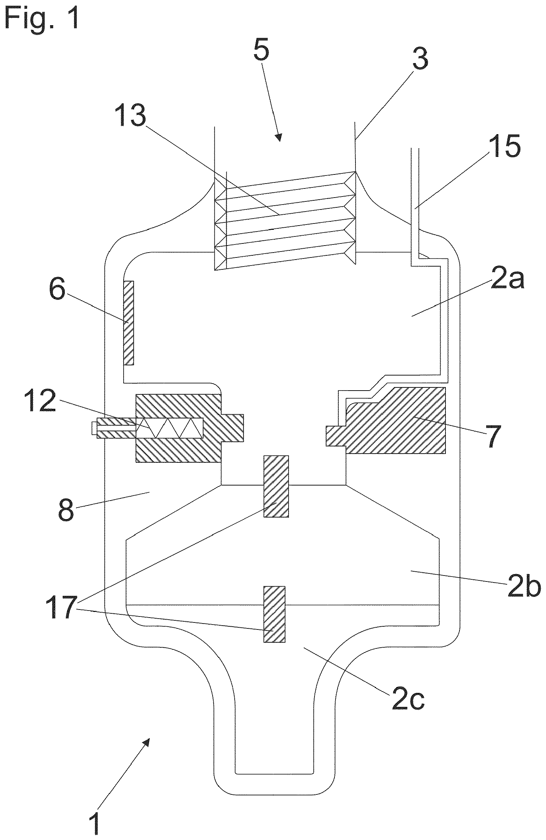

In einer schematischen Querschnittsdarstellung zeigt Fig. 1 einen aus drei Segmenten 2a, 2b, 2c zusammengesetzten erfindungsgemäßen Formkern 2, wobei die Segmente 2a, 2b, 2c jeweils über ein Verbindungsmittel 17 verbunden sind. An beschränkten Teilbereichen des Formkerns 2 sind ein Strukturelement 6 und ein formstabiles Funktionselement in Form eines Sensors 12 vom Formkern 2 gehalten. Weitere formstabile Funktionselemente, die an beschränkten Teilbereichen des Formkerns 2 gehalten werden, sind ein Befestigungselement 13 in Form eines Gewindes, eine Kabelführung 15 sowie ein allgemeines Funktionselement 7, beispielsweise ein RFID-Chip. Das Strukturelement 6 und die Funktionselemente 7, 12, 13, 15 werden während des Umgebens mit der Kunststoffschmelze 8 vom Formkern 2 gehalten. Die Figur 1 zeigt den Betriebsmitteltank 1 nach zumindest teilweisem Aushärten der Kunststoffschmelze 8 und nach dem Entfernen aus der Werkzeugform 4. In weiterer Folge werden der Formkern 2a, 2b und 2c, die Verbindungsmittel 17 und das Strukturelement 10 aus dem Inneren des Betriebsmitteltanks 1 entfernt.

In der in Fig. 1 dargestellten Situation ist der erfindungsgemäße Formkern 2 bereits mit einer teilweise ausgehärteten Kunststoffschmelze 8 in Form eines Thermoplasts umgeben. Die Funktionselemente 7, 12, 13 und 15 werden nach Aushärten der Schmelze 8 dabei stoffschlüssig und/oder formschlüssig vom Betriebsmitteltank 1 gehalten. Das Strukturelement 6 weist einen flächigen Bereich mit einem darauf angeordneten Strukturmerkmal 10 auf, beispielsweise eine glatte Oberfläche, welches beim Umgeben mit der Kunststoffschmelze 8 auf die innere Oberfläche 9 des Betriebsmitteltanks 1 übertragen wird.

Die erwähnten beschränkten Teilbereiche sind vom Haltebereich 3, an dem der Formkern 2 in einer Werkzeugform 4 gehalten wird, gesondert. Nach dem Aushärten der Kunststoffschmelze 8 wird das Formkernmaterial über die Öffnung 5, die beim Haltebereich 3 im Betriebsmitteltank 1 verbleibt, entfernt. Auch die Verbindungsmittel 17 und das Strukturelement 6 werden über die verbleibende Öffnung 5 entfernt.

Insbesondere beim Funktionselement 7 und beim Sensor 12 ist erkennbar, dass diese Elemente in einem hinterschnittenen Bereich des Betriebsmitteltanks 1 angeordnet sind und daher abgesehen von Zugängen zum Inneren und zum Äußeren des Betriebsmitteltanks 1 mit Kunststoffschmelze 8 umgeben sind.

Dabei ist beim Sensor 12 ein Bereich auf der Außenseite des Betriebsmitteltanks 1 zugänglich, beispielsweise um eine Daten- oder Steuerleitung anzuschließen. Die Hinterschneidungen sind insbesondere aufgrund der Segmentierung des Formkerns 2 möglich.

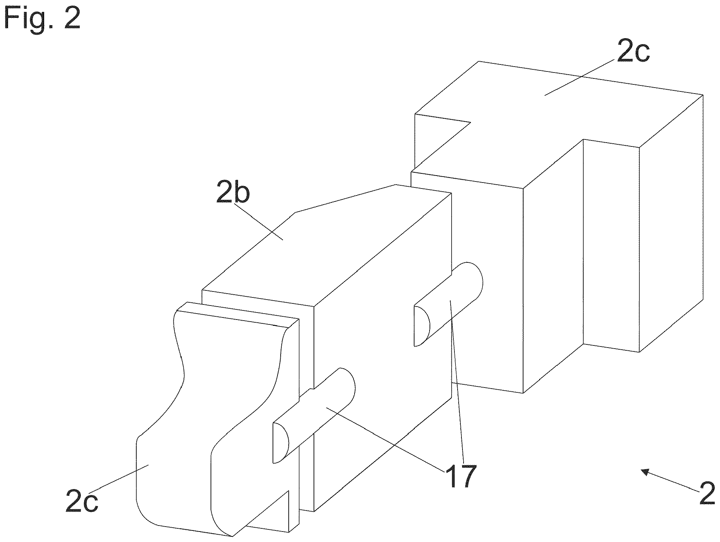

Figur 2 zeigt in einer perspektivischen schematischen Ansicht den erfindungsgemäßen Formkern 2, wobei die in der Figur 1 gezeigten Segmente 2b und 2c geschnitten dargestellt sind, damit die Verbindungsmittel 17, mit denen die Segmente 2a, 2b und 2c miteinander verbunden sind, erkennbar sind. Das Segment 2c ist in vollständiger Form dargestellt. Mit derartigen Segmenten 2a, 2b, 2c sind starke Hinterschneidungen für den Betriebsmitteltank 1 möglich.

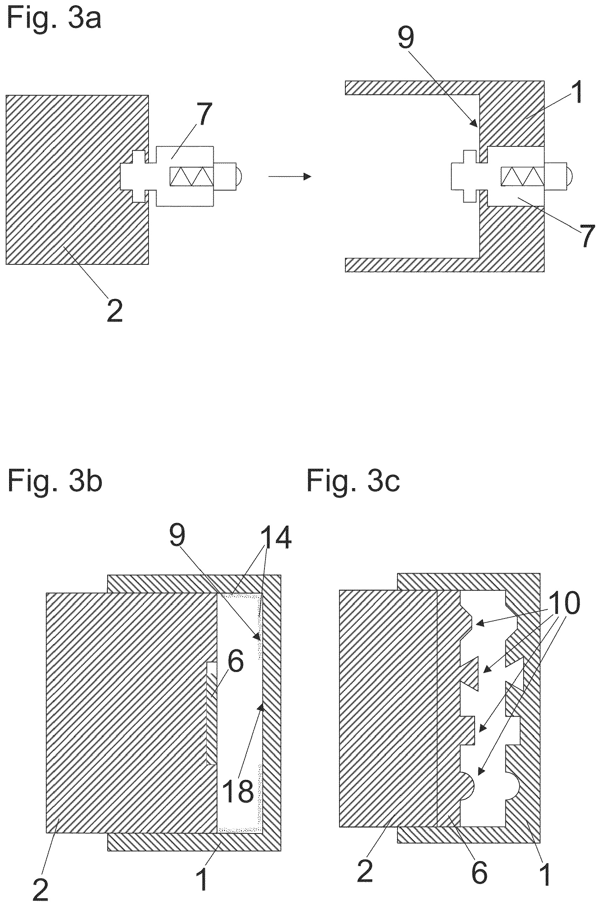

In Fig. 3a ist auf der linken Abbildung schematisch dargestellt, wie ein Funktionselement 7, beispielsweise ein Piezo-Elements, vom Formkern 2 gehalten wird. Das Funktionslement 7 weist senkrecht von seiner Längserstreckung abstehende Haltebereiche auf, um die das Formkern-Material angeordnet wird, sodass eine formschlüssige Verbindung zwischen Funktionselement 7 und Formkern 2 entsteht. Der Formkern 2 wird beispielsweise in einer Werkzeugform 4 mit Kunststoffschmelze 8, etwa einem Thermoplast, umgeben. Härtet die Kunststoffschmelze 8 dann aus, wird nach Entfernen des Formkernmaterials das formstabile Funktionselement 7 vom erfindungsgemäßen Betriebsmitteltank form- und stoffschlüssig gehalten und hat Zugang zum Inneren, um beispielsweise Daten hinsichtlich des Inhalts des Betriebsmitteltanks 1 zu erfassen. Gleichzeitig wird das Funktionselement 7 in diesem Fall derart vom Betriebsmitteltank 1 gehalten, sodass auch ein Zugang zum Äußeren des Betriebsmitteltanks 1 verbleibt, beispielsweise um eine Datenoder Steuerleitung anzuschließen.

In Fig. 3b ist schematisch gezeigt, wie ein Strukturmerkmal 10 in Form einer glatten Oberfläche eines flächigen Bereich eines Strukturelements 6, welches vom Formkern 2 während des Umgebens mit Kunststoffschmelze 8 gehalten wird, auf die innere Oberfläche 9 eines erfindungsgemäßen Betriebsmitteltanks 1 aus einem thermoplastischen Kunststoff übertragen wird. Dabei wird ein Negativ der Oberfläche des Strukturelements 6 übertragen. Nach dem Entfernen des Formkern-Materials verbleibt ein Bereich 18, in dem die innere Oberfläche 9 des Betriebsmitteltanks 1 glatt ist, während die davon abgesehene innere Oberfläche 9 einen Bereich 14 mit rauer Oberfläche ausbildet.

In Fig. 3c ist schematisch dargestellt, wie ein Strukturelement 6, welches einen flächigen Bereich aufweist, auf dem Strukturmerkmale 10 in Form unterschiedlicher Rippenformen angeordnet sind, auf die innere Oberfläche 9 eines erfindungsgemäßen Betriebsmitteltanks 1 überträgt. Das Strukturelement 6 wird vom Formkern 2 während des Umgebens mit Kunststoffschmelze 8 gehalten. Dadurch entsteht eine Negativ-Form der Rippenformen auf der inneren Oberfläche 9 des Betriebsmitteltanks 1 im Bereich, in dem das Strukturelement 6 vom Formkern 2 während des Umgebens mit der Kunststoffschmelze 8 gehalten wurde. Die Rippenformen ermöglichen es, dass die innere Oberfläche 9 des Betriebsmitteltanks 1 in diesem Bereich beispielsweise unterschiedliche Hinterschneidungen aufweisen kann, wodurch eine besonders hohe Stabilität erreicht wird.

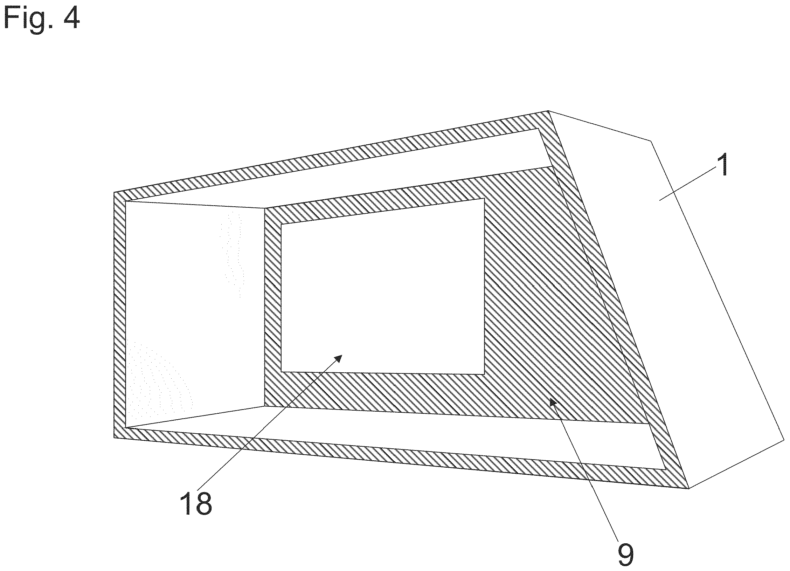

Fig. 4 zeigt in einer schematischen perspektivischen Ansicht den Innenbereich eines erfindungsgemäßen Betriebsmitteltanks 1, wobei ein Bereich 18 eine glatte Oberfläche aufweist, die durch Übertragung eines Strukturmerkmals 10 eines Strukturelements 6 übertragen wurde. Dieser Oberflächenbereich stellt ein glattes Negativ des Oberflächenbereichs des Strukturelements 6 dar. Der Bereich 15 weist demgegenüber eine raue Oberfläche auf, die beim Umgeben des Formkerns 2 mit Kunststoffschmelze 8 entstanden ist. In der Figur 3b ist beispielhaft und schematisch dargestellt, wie ein solches Strukturmerkmal 10 in Form einer glatten Oberfläche auf die Innenwandung des Betriebsmitteltanks 1 übertragen wird.

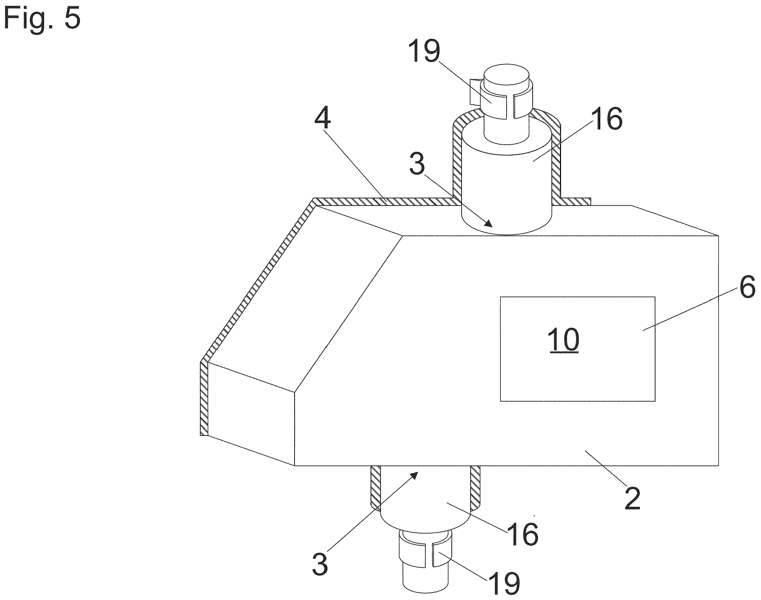

Fig. 5 zeigt in einer schematischen Darstellung, wie ein erfindungsgemäßer Formkern 2 in einer Werkzeugform 4 einer Kunststoffspritzgussmaschine gehalten wird. Ein Strukturelement 6 ist an den Formkern 2 angeklebt und wird dadurch während des Umgebens mit Kunststoffschmelze 8 vom Formkern 2 gehalten. Ein Strukturelement 10 in Form einer glatten Oberfläche wird dadurch auf die innere Oberfläche 9 des entstehenden erfindungsgemäßen Betriebsmitteltanks 1 übertragen. Der Formkern 2 weist zwei Haltebereiche 3 auf, über die der Formkern 2 in der Werkzeugform 4 gehalten wird. Zu diesem Zweck sind Haltemittel 16, beispielsweise in Form von Metallzapfen, am oder im Formkern 2 angeordnet. Die Haltemittel 16 werden über Klammern 19 in der Werkzeugform 4 gehalten. Nach Umgeben des Formkerns 2 mit Kunststoffschmelze 8 und Aushärten,Entfernen des Formkernmaterials sowie Entfernen der Haltemittel 16, verbleiben Öffnungen 5 im Betriebsmitteltank 1.

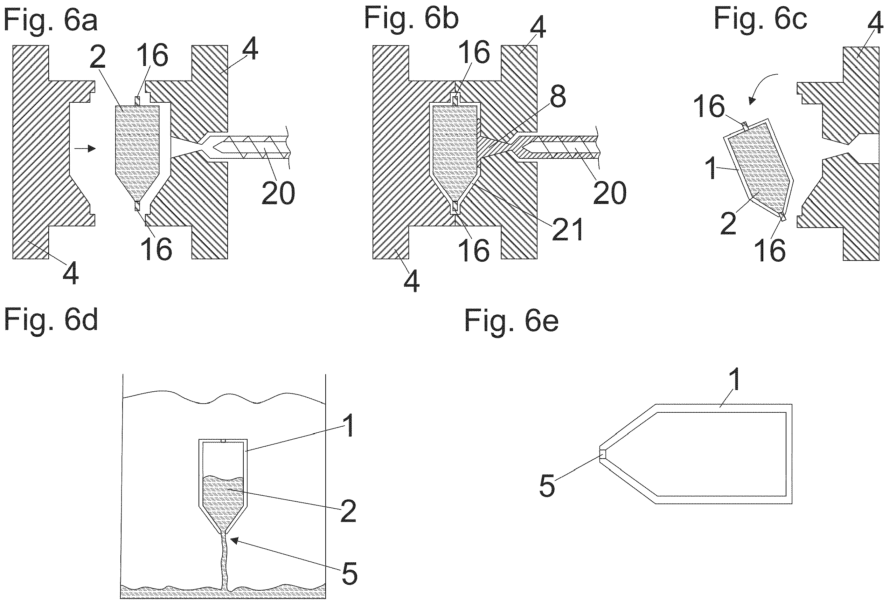

In den Fig. 6a bis 6e sind schematisch verschiedene Schritte des erfindungsgemäßen Verfahrens dargestellt, wobei in Fig. 6a der Formkern 2 in einer Werkzeugform 4 über die Haltemittel 16 gehalten wird. Anschließend wird die Form 4 geschlossen und flüssige Kunststoffschmelze 8, beispielsweise über eine Plastifizierschnecke 20 einer Kunststoffspritzgussmaschine, in die Form 4 eingespritzt. Dabei kann es sich beispielsweise um ein thermoplastisches Material handeln.

In Fig. 6b ist gezeigt, wie flüssige Kunststoffschmelze 8 von der Plastifizierschnecke 20 in die Form 4 eingespritzt wird und durch Anordnen im Hohlraum 21 der Formkern 2 mit Kunststoffschmelze 8 umgeben wird. In den Haltebereichen 3, in denen die Haltemittel 16 angeordnet sind, wird keine Kunststoffschmelze 8 angeordnet. Hier verbleiben somit Öffnungen 5 im Betriebsmitteltank 1.

Fig. 6c zeigt schematisch den Schritt des Entformens, bei dem der Rohling mit dem Betriebsmitteltank 1, den Haltemitteln und dem innerhalb des Betriebsmitteltanks 1 angeordneten Formkern 2 aus der Form 4 entnommen wird.

In Fig. 6d ist schematisch dargestellt, wie der Formkern 2, beispielsweise mit Wasser oder einer Lösung aus dem Inneren des Betriebsmitteltanks 1 ausgespült wird. Das Formkernmaterial kann dabei über die Öffnung 5 ausfließen.

Das fertige Bauteil ist schematisch in der Figur 6e gezeigt. Der besseren Übersichtlichkeit halber sind hier Funktionselemente 7 oder übertragene Strukturmerkmale 10 nicht dargestellt.

### Bezugszeichenliste:

- 1: Betriebsmitteltank
- 2: Formkern mit Segmenten 2a, 2b, 2c
- 3: Haltebereich
- 4: Werkzeugform
- 5: Öffnung Betriebsmitteltank
- 6: Strukturelement
- 7: Funktionselement
- 8: Kunststoffschmelze
- 9: innere Oberfläche des Betriebsmitteltanks
- 10: Strukturmerkmal
- 11: Betriebsmitteltankinneres
- 12: Sensor
- 13: Befestigungselement
- 14: Bereich mit rauer Oberfläche
- 15: Kabelführung
- 16: Haltemittel
- 17: Verbindungsmittel
- 18: Bereich mit glatter Oberfläche
- 19: Klammer
- 20: Plastifizierschnecke
- 21: Hohlraum

## Patentansprüche

1. Verfahren zur Herstellung eines Betriebsmitteltanks (1) aus Kunststoff für ein Kraftfahrzeug umfassend folgende Schritte:
- Bereitstellen eines aus einem, vorzugsweise riesel- oder fließfähigen, Formkern-Material hergestellten Formkerns (2), wobei der Formkern (2) zumindest einen Haltebereich (3) aufweist, über den der Formkern (2) in einer Werkzeugform (4) oder einer Kunststoffformgebungsmaschine gehalten wird,
- Umgeben des Formkerns (2) mit einer Kunststoffschmelze (8), wobei an dem zumindest einen Haltebereich (3), über den der Formkern (2) in einer Werkzeugform (4) oder einer Kunststoffformgebungsmaschine gehalten wird, zumindest eine Öffnung (5) im Betriebsmitteltank (1) verbleibt,
- Entfernen des Formkern-Materials aus dem Betriebsmitteltank (1) über die verbleibende Öffnung (5), **dadurch gekennzeichnet, dass**
an einem beschränkten, von dem zumindest einen Haltebereich (3) gesonderten Teilbereich des Formkerns (2) ein formstabiles Funktionselement (7) angeordnet und während des Umgebens mit der Kunststoffschmelze (8) vom Formkern (2) gehalten wird, wobei beim Umgeben mit der Kunststoffschmelze (8) eine innere Oberfläche (9) des Betriebsmitteltanks (1) gebildet wird, mit welcher das Funktionselement (7) beim Umgeben mit der Kunststoffschmelze (8) verbunden wird und wobei das Funktionselement (7) nach Aushärten der Kunststoffschmelze (8) und dem Entfernen des Formkern-Materials vom Betriebsmitteltank (1) derart stoffschlüssig und/oder formschlüssig gehalten wird, dass das Funktionselement (7) Zugang zum Inneren des Betriebsmitteltanks (1) hat, wobei das Funktionselement (7) ein elektronisches Funktionselement enthält.

2. Verfahren nach Anspruch 1, wobei das Funktionselement (7) einen Sensor (12) und/oder eine Sende-Empfangseinheit enthält.

3. Verfahren nach Anspruch 1 oder 2, wobei das Funktionselement (7) ein Dichtungselement (13) und/oder ein Befestigungselement (14) enthält.

4. Verfahren nach einem der Ansprüche 1 bis 3, wobei an einem beschränkten, von dem zumindest einen Haltebereich (3) gesonderten Teilbereich des Formkerns (2) ein, vorzugsweise metallisches und/oder keramisches, Strukturelement (6) angeordnet und während des Umgebens mit der Kunststoffschmelze (8) vom Formkern (2) gehalten wird, wobei beim Umgeben mit der Kunststoffschmelze (8) eine innere Oberfläche (9) des Betriebsmitteltanks (1) gebildet wird, auf weiche ein auf dem Strukturelement (6) angeordnetes Strukturmerkmal (10) beim Umgeben mit der Kunststoffschmelze (8) übertragen wird und wobei das Strukturelement (6) nach zumindest teilweisem Aushärten der Kunststoffschmelze (8) durch die verbleibende Öffnung (5) aus dem Betriebsmitteltank (1) entfernt wird.

5. Verfahren nach Anspruch 4, wobei das Strukturmerkmal (10) durch eine glatte Oberfläche des Strukturelements (6) gebildet ist.

6. Verfahren nach Anspruch 4 oder 5, wobei das Strukturelement (6) einen flächigen Bereich aufweist, auf welchem das Strukturmerkmal (10) angeordnet ist.

7. Verfahren nach einem der Ansprüche 1 bis 6, wobei das Funktionselement (7) und/oder das Strukturelement (10) formschlüssig und/oder kraftschlüssig und/oder stoffschlüssig vom Formkern (2) während des Umgebens mit Kunststoffschmelze (8) gehalten wird.

8. Verfahren nach einem der Ansprüche 1 bis 7, wobei der Formkern (2) zwei Haltebereiche (3) aufweist, über die der Formkern (2) in einer Werkzeugform (4) oder einer Kunststoffformgebungsmaschine gehalten wird.

9. Verfahren nach einem der Ansprüche 1 bis 8, wobei an dem wenigstens einen Haltebereich (3) ein, vorzugsweise metallisches, Haltemittel (16) angeordnet ist, mit dem der Formkern (2) in einer Werkzeugform (4) oder einer Kunststoffformgebungsmaschine gehalten wird.

10. Verfahren nach einem der Ansprüche 1 bis 9, wobei der Formkern (2) aus mindestens zwei Segmenten (2a, 2b, 2c) zusammengesetzt ist, wobei jeweils zwei Segmente (2a, 2b, 2c) über Verbindungsmittel (17) miteinander verbunden sind und wobei das oder die Verbindungsmittel (17) nach dem Umgeben mit der Kunststoffschmelze (8) durch die verbleibende Öffnung (5) aus dem Betriebsmitteltank (1) entfernt wird oder werden.

11. Verfahren nach einem der Ansprüche 1 bis 10, wobei der Formkern (2) aus Sand oder Schaumstoff-Kügelchen besteht.

12. Verfahren nach Anspruch 11, wobei der Formkern (2) einen Mantel aus einem auflösbaren oder zerkleinerbaren Material aufweist.

13. Verfahren nach einem der Ansprüche 1 bis 12, wobei der Formkern mittels eines 3D-Druckverfahrens hergestellt wird.

14. Formkern (2) zur Herstellung eines Betriebsmitteltanks (1) aus Kunststoff für ein Kraftfahrzeug gemäß einem Verfahren nach einem der Ansprüche 1 bis 13.

15. Betriebsmitteltank (1) für ein Kraftfahrzeug, hergestellt gemäß einem Verfahren nach einem der Ansprüche 1 bis 13, wobei der Betriebsmitteltank (1) aus einem Kunststoff spritzgegossen ist.

## Claims

1. A method of producing an operating fluid tank (1) of plastic for a motor vehicle including the following steps:
- providing a mold core (2) produced from a, preferably pourable or flowable, mold core material, wherein the mold core (2) has at least one holding region (3), by way of which the mold core (2) is held in a tool mold (4) or in a plastic shaping machine,
- surrounding the mold core (2) with a plastic melt (8), wherein at least one opening (5) remains in the operating fluid tank (1) in the at least one holding region (3), by way of which the mold core (2) is held in a tool mold (4) or a plastic shaping machine, and
- removing the mold core material from the operating fluid tank (1) by way of the remaining opening (5),
**characterised in that**
a stable-shape functional element (7) is arranged at a limited portion of the mold core (2), that is separate from the at least one holding region (3), and is held by the mold core (2) while being surrounded with the plastic melt (8), wherein upon being surrounded with the plastic melt (8) an inner surface (9) of the operating fluid tank (1) is formed, to which the functional element (7) is connected upon being surrounded with the plastic melt (8) and wherein the functional element (7) is held in material-bonded and/or positively locking relationship after hardening of the plastic melt (8) and removal of the mold core material by the operating fluid tank (1) in such a way that the functional element (7) has access to the interior of the operating fluid tank (1), wherein the functional element (7) includes an electronic functional element.

2. A method as set forth in claim 1 wherein the functional element (7) includes a sensor (12) and/or a transmitting-receiving unit.

3. A method as set forth in claim 1 or 2 wherein the functional element (7) includes a sealing element (13) and/or a fixing element (14).

4. A method as set forth in one of claims 1 through 3 wherein a preferably metallic and/or ceramic structural element (6) is arranged at a limited portion of the mold core (2), that is separate from the at least one holding region (3), and is held by the mold core (2) while being surrounded with the plastic melt (8), wherein upon being surrounded with the plastic melt (8) an inner surface (9) of the operating fluid tank (1) is formed, to which a structural feature (10) arranged on the structural element (6) is transferred upon being surrounded with the plastic melt (8) and wherein the structural element (6) is removed from the operating fluid tank (1) through the remaining opening (5) after at least partial hardening of the plastic melt (8).

5. A method as set forth in claim 4 wherein the structural feature (10) is formed by a smooth surface of the structural element (6).

6. A method as set forth in claim 4 or 5 wherein the structural element (6) has a flat surface region on which the structural element (10) is arranged.

7. A method as set forth in one of claims 1 through 6 wherein the functional element (7) and/or the structural element (10) is held in positively locking and/or force-locking and/or material-bonded relationship by the mold core (2) while being surrounded with liquid plastic melt (8).

8. A method as set forth in one of claims 1 through 7 wherein the mold core (2) has two holding regions (3), by way of which the mold core (2) is held in a tool mold (4) or a plastic shaping machine.

9. A method as set forth in one of claims 1 through 8 wherein arranged at the at least one holding region (3) is a preferably metallic holding means (16) with which the mold core (2) is held in a tool mold (4) or a plastic shaping machine.

10. A method as set forth in one of claims 1 through 9 wherein the mold core (2) is composed of at least two segments (2a, 2b, 2c), wherein each two segments (2a, 2b, 2c) are connected together by way of connecting means (17) and wherein the one or more connecting means (17) after the core is surrounded with the plastic melt (8) is or are removed from the operating fluid tank (1) through the remaining opening (5).

11. A method as set forth in one of claims 1 through 10 wherein the mold core (2) comprises sand or foam balls.

12. A method as set forth in claim 11 wherein the mold core (2) has a casing comprising a soluble or crushable material.

13. A method as set forth in one of claims 1 through 12 wherein the mold core is produced by means of a 3D printing process.

14. A mold core (2) for the production of an operating fluid tank (1) of plastic for a motor vehicle according to a method as set forth in one of claims 1 through 13.

15. An operating fluid tank (1) for a motor vehicle, produced according to a method as set forth in one of claims 1 through 13, wherein the operating fluid tank (1) is injection molded from a plastic.

## Revendications

1. Procédé de fabrication d'un réservoir de matière consommable pour l'exploitation (1) en matière plastique pour un véhicule automobile comprenant les étapes suivantes :
- la fourniture d'un noyau de moule (2) fabriqué en un matériau de noyau de moule de préférence coulant ou fluide, dans lequel le noyau de moule (2) présente au moins une zone de retenue (3), par le biais de laquelle le noyau de moule (2) est maintenu dans un moule d'outil (4) ou une machine de formage de matière plastique,
- l'entourage du noyau de moule (2) avec une matière plastique fondue (8), dans lequel au moins une ouverture (5) reste dans le réservoir de matière consommable pour l'exploitation (1) au niveau de l'au moins une zone de retenue (3), par le biais de laquelle le noyau de moule (2) est maintenu dans un moule d'outil (4) ou une machine de formage de matière plastique,
- le retrait du matériau de noyau de moule du réservoir de matière consommable pour l'exploitation (1) par le biais de l'ouverture (5) restante, **caractérisé en ce que**
un élément fonctionnel (7) indéformable est agencé au niveau d'une zone partielle limitée séparée de l'au moins une zone de retenue (3) du noyau de moule (2) et est maintenu par le noyau de moule (2) pendant l'entourage avec la matière plastique fondue (8), dans lequel lors de l'entourage avec la matière plastique fondue (8), une surface intérieure (9) du réservoir de matière consommable pour l'exploitation (1) est formée, à laquelle l'élément fonctionnel (7) est relié lors de l'entourage avec la matière plastique fondue (8) et dans lequel l'élément fonctionnel (7) est maintenu par matière et/ou par complémentarité de formes après le durcissement de la matière plastique fondue (8) et le retrait du matériau de noyau de moule par le réservoir de matière consommable pour l'exploitation (1) de telle manière que l'élément fonctionnel (7) ait accès à l'intérieur du réservoir de matière consommable pour l'exploitation (1), dans lequel l'élément fonctionnel (7) contient un élément fonctionnel électronique.

2. Procédé selon la revendication 1, dans lequel l'élément fonctionnel (7) contient un capteur (12) et/ou une unité d'émission et de réception.

3. Procédé selon la revendication 1 ou 2, dans lequel l'élément fonctionnel (7) contient un élément de joint étanche (13) et/ou un élément de fixation (14).

4. Procédé selon l'une quelconque des revendications 1 à 3, dans lequel un élément structurel (6), de préférence métallique et/ou céramique, est agencé au niveau d'une zone partielle limitée séparée de l'au moins une zone de retenue (3) du noyau de moule (2) et est maintenu par le noyau de moule (2) pendant l'entourage avec la matière plastique fondue (8), dans lequel lors de l'entourage avec la matière plastique fondue (8), une surface intérieure (9) du réservoir de matière consommable pour l'exploitation (1) est formée, à laquelle une caractéristique structurelle (10) agencée sur l'élément structurel (6) est transmise lors de l'entourage avec la matière plastique fondue (8) et dans lequel l'élément structurel (6) est retiré après le durcissement au moins partiel de la matière plastique fondue (8) par l'ouverture (5) restante du réservoir de matière consommable pour l'exploitation (1).

5. Procédé selon la revendication 4, dans lequel la caractéristique structurelle (10) est formée par une surface lisse de l'élément structurel (6).

6. Procédé selon la revendication 4 ou 5, dans lequel l'élément structurel (6) présente une zone plane, sur laquelle la caractéristique structurelle (10) est agencée.

7. Procédé selon l'une quelconque des revendications 1 à 6, dans lequel l'élément fonctionnel (7) et/ou l'élément structurel (10) est maintenu par complémentarité de formes et/ou à force et/ou par matière par le noyau de moule (2) pendant l'entourage avec la matière plastique fondue (8).

8. Procédé selon l'une quelconque des revendications 1 à 7, dans lequel le noyau de moule (2) présente deux zones de retenue (3), par le biais desquelles le noyau de moule (2) est maintenu dans un moule d'outil (4) ou une machine de formage de matière plastique.

9. Procédé selon l'une quelconque des revendications 1 à 8, dans lequel un moyen de retenue (16), de préférence métallique, est agencé au niveau de l'au moins une zone de retenue (3), avec lequel le noyau de moule (2) est maintenu dans un moule d'outil (4) ou une machine de formage de matière plastique.

10. Procédé selon l'une quelconque des revendications 1 à 9, dans lequel le noyau de moule (2) est composé d'au moins deux segments (2a, 2b, 2c), dans lequel respectivement deux segments (2a, 2b, 2c) sont reliés entre eux par le biais de moyens de liaison (17) et dans lequel le ou les moyens de liaison (17) est ou sont retiré(s) après l'entourage avec la matière plastique fondue (8) par l'ouverture (5) restante du réservoir de matière consommable pour l'exploitation (1).

11. Procédé selon l'une quelconque des revendications 1 à 10, dans lequel le noyau de moule (2) se compose de sable ou de billes de mousse.

12. Procédé selon la revendication 11, dans lequel le noyau de moule (2) présente une enveloppe en un matériau soluble ou broyable.

13. Procédé selon l'une quelconque des revendications 1 à 12, dans lequel le noyau de moule est fabriqué au moyen d'un procédé d'impression en trois dimensions.

14. Noyau de moule (2) pour la fabrication d'un réservoir de matière consommable pour l'exploitation (1) en matière plastique pour un véhicule automobile selon un procédé selon l'une quelconque des revendications 1 à 13.

15. Réservoir de matière consommable pour l'exploitation (1) pour un véhicule automobile, fabriqué selon un procédé selon l'une quelconque des revendications 1 à 13, dans lequel le réservoir de matière consommable pour l'exploitation (1) est coulé par injection en une matière plastique.
